# EUROPÄISCHE PATENTANMELDUNG

(11) **EP 1 873 405 A2**
(43) Veröffentlichungstag der Anmeldung: **02.01.2008**
(21) Anmeldenummer: 07012363.3
(22) Anmeldetag: 25.06.2007
(51) Int. Cl.: F16B 25/10, F16B 35/06

(54) **Spanplattenschraube**

(30) Priorität: 29.06.2006 DE 102006031298; 29.06.2006 DE 102006031299
(71) Anmelder: SWG Schraubenwerk Gaisbach GmbH, 74638 Waldenburg (DE)
(72) Erfinder: Heim, Markus, 74632 Neuenstein (DE)
(74) Vertreter: Patentanwälte Ruff, Wilhelm, Beier, Dauster & Partner

(57) **Zusammenfassung**

Bei einer Spanplattenschraube wird vorgeschlagen, innerhalb des ein Spanplattengewinde aufweisenden Teils (4b) des Schafts (4) den Schaft selbst zwischen den Windungen des Gewindes mit einer von einer Kreisform abweichenden Querschnittsform zu versehen. Die Querschnittsform weist vorzugsweise die Form eines groben Sägeblatts mit abgerundeten Zähnen auf. Dadurch werden in Längsrichtung der Schraube verlaufende abgerundete Kanten (7) gebildet, die in Ausdrehrichtung zeigen. Dies führt zu einer Sicherung der Schraube gegen ein Zurückdrehen, wenn die Schraube wechselnden Belastungen, beispielsweise Vibrationen, unterworfen ist.

Die zwischen den Kanten gebildeten Nuten können beispielsweise mit einer Beschichtung ausgefüllt werden, die eine Klebewirkung entwickelt, insbesondere dann, wenn sie beim Eindrehen der Schraube erwärmt wird.

## Beschreibung

Die Erfindung betrifft eine Spanplattenschraube.

Spanplattenschrauben werden in Holz oder holzähnliche Materialien eingeschraubt. Sie haben üblicherweise eine selbstbohrende Spitze, so dass sie sich ihr Loch selbst bohren. Dabei wird das Material, aus dem das Element besteht, in die die Spanplattenschraube eingeschraubt wird, zum Teil zerschnitten und zum Teil seitlich verdrängt. Daher wirken auf den Schaft der Schraube nach dem Einschrauben der Schraube seitliche Druckkräfte ein.

Bei den bisher bekannten Spanplattenschrauben wurden Optimierungen im Hinblick auf ein schnelles Einschrauben, dass Herstellen einer Senkung für den Schraubenkopf und hohe Auszugskräfte durchgeführt. Zur Verbesserung des Einschraubens können dabei zusätzliche schräg zum Gewinde oder achsparallel verlaufende Rippen im Bereich der Bohrspitze dienen.

Die Auszugskräfte wirken in Längsrichtung der Schraube. Auf Grund des seitlichen Einwirkens des Materials auf den Schaft sind die Schrauben in der Regel auch gegen ein Lockern gesichert.

Es hat sich nun herausgestellt, dass unter bestimmten Bedingungen auf Grund von wechselnden Beanspruchungen, Vibrationen oder dergleichen dennoch die Gefahr besteht, dass eine Schraube sich lockert.

Es ist bereits eine Gewindeformschraube zum Gewindeformen in Gestein oder Beton bekannt (DE 92 16 791), deren Gewinde eine Beschichtung mit einem aushärtbaren Klebstoff aufweist. Diese Schraube ist aber für Beton oder Gestein bestimmt. Bei diesem Anwendungsfall treten die eingangs erwähnten Probleme nicht auf.

Der Erfindung liegt die Aufgabe zu Grunde, eine Spanplattenschraube zu schaffen, in die auch unter wechselnden Beanspruchungen sich nicht lockert.

Zur Lösung dieser Aufgabe schlägt die Erfindung eine Spanplattenschraube mit den im Anspruch 1 genannten Merkmalen vor. Weiterbildungen der Erfindung sind Gegenstand von Unteransprüchen.

Durch das Vorsehen einer Rückdrehsicherung kann gewährleistet werden, dass einerseits das Einschrauben der Schraube sich nicht oder nur unwesentlich erschwert, andererseits aber ein Zurückdrehen der Schraube auch unter wechselnden Belastungen zuverlässig verhindert wird. Schraubensicherungen sind bei metrischen Schrauben zwischen diesen und Sicherungsmuttern schon bekannt. Diese Lösungen können aber für Spanplattenschrauben keine Anregung liefern.

Die Erfindung schlägt in Weiterbildung vor, dass die Rückdrehsicherung an dem Schaft der Spanplattenschraube ausgebildet ist, also nicht an dem Schraubenkopf. Das Anordnen der Rückdrehsicherung an dem Schaft der Schraube hat den Vorteil, dass dort eine große Fläche zur Verfügung steht, längs der eine Berührung zwischen dem Holz oder holzähnlichen Material und der Schraube vorhanden ist. Daher kann eine wirksame Rückdrehsicherung auch unter ungünstigen Bedingungen bewirkt werden.

Erfindungsgemäß kann vorgesehen sein, dass die Rückdrehsicherung eine Beschichtung aus einem Material aufweist, das eine Klebewirkung entwickelt. Durch das Vorsehen einer Beschichtung aus einem Material, das bei oder auch erst nach dem Einschrauben der Schraube eine Klebewirkung entwickelt, kann gewährleistet werden, dass einerseits das Einschrauben der Schraube sich nicht oder nur unwesentlich erschwert, andererseits aber ein Zurückdrehen der Schraube auch unter wechselnden Belastungen zuverlässig verhindert wird.

Erfindungsgemäß kann vorgesehen sein, dass die Beschichtung sich über den das Schraubengewinde aufweisenden Teil des Schafts erstreckt. Die Beschichtung kann damit auch die Gewindeflanken selbst bedecken. Das Anordnen der Beschichtung an dem Schaft der Schraube hat den Vorteil, dass dort eine größere Fläche zur Verfügung steht, längs der eine Berührung zwischen dem Holz oder holzähnlichen Material und der Schraube vorhanden ist. Daher kann eine wirksame Rückdrehsicherung auch unter ungünstigen Bedingungen bewirkt werden.

In Weiterbildung der Erfindung kann vorgesehen sein, dass der Schaft der Spanplattenschraube mindestens in einem Teil des Gewindeabschnitts zwischen den Windungen einen von einer Kreisform abweichenden Querschnitt aufweist. Allein durch diese Querschnittsform kann eine Rückdrehsicherung verwirklicht werden. Bei jedem Versuch, die Schraube heraus zu schrauben, muss eine Verformung und/oder Verdrängung des Holzes oder des holzähnlichen Materials durchgeführt werden, was zu Reaktionskräften und damit zu einer Hemmung der Bewegung führt.

Ein Beispiel für eine derartige Querschnittsform besteht darin, dass der Querschnitt in Längsrichtung der Schraube verlaufende Kanten aufweist, die vorzugsweise mehr oder weniger leicht abgerundet sind. Durch die Abrundung soll erreicht werden, dass keine Schnittkräfte erzeugt werden.

Insbesondere kann vorgesehen sein, dass der Querschnitt in Rückdrehrichtung zeigende abgerundete Kanten aufweist, also in die Richtung zeigende Kanten, in der die Schraube bewegt wird, um sie herauszuschrauben. Der Querschnitt kann beispielsweise angenähert die Form eines Sägeblatts aufweisen, also eine Sägezahnverzahnung mit abgerundeten Zähnen. Dadurch wird erreicht, dass sich das Einschrauben der Schraube nicht erschwert, dass andererseits aber eine gute Rückdrehsicherung gegeben ist.

In nochmaliger Weiterbildung der Erfindung kann vorgesehen sein, dass der von der Kreisform abweichende Querschnitt über die gesamte Länge des Gewindeabschnitts vorhanden ist, also beispielsweise die Kanten sich über die gesamte Länge des Gewindeabschnitts erstrecken.

In Weiterbildung der Erfindung kann vorgesehen sein, dass der Schaft der Spanplattenschraube mindestens in einem Teil des Gewindeabschnitts zwischen den Windungen Nuten aufweist. In diesen Nuten kann das Material der Beschichtung zusätzlich untergebracht sein, so dass dort ein Reservoir geschaffen wird, aus dem das Material abgegeben werden kann. Die auf den Schaft der Schraube einwirkenden Fasern können nicht in diese Nuten eingreifen, da die Fasern quer zur Längsrichtung der Schraube verlaufen. Selbst wenn beim Eindrehen der Schraube ein Teil der Beschichtung durch die Fasern zur Seite gedrückt oder abgeschabt wird, steht in den Nuten ausreichend Beschichtungsmaterial zur Verfügung.

Erfindungsgemäß kann vorgesehen sein, dass ein gewindefreier Abschnitt des Schraubenschafts, der in der Regel unterhalb des Schraubenkopfs beginnt, einen kreisförmigen Querschnitt aufweist. An dieser Stelle braucht also keine Rückdrehsicherung vorhanden zu sein.

Es ist aber ebenfalls möglich, dass auch ein gewindefreier Abschnitt des Schafts einen von der Kreisform abweichenden unrunden Querschnitt aufweist.

In nochmaliger Weiterbildung der Erfindung kann vorgesehen sein, dass die Nuten über die gesamte Länge des Gewindeabschnitts vorhanden ist, also beispielsweise die Kanten sich über die gesamte Länge des Gewindeabschnitts erstrecken.

Erfindungsgemäß kann vorgesehen sein, dass ein gewindefreier Abschnitt des Schraubenschafts, der in der Regel unterhalb des Schraubenkopfs beginnt, keine Nuten aufweist. An dieser Stelle braucht entweder keine Beschichtung vorhanden zu sein, oder es reicht eine Beschichtung auf der zylindrischen Mantelfläche des Schraubenschafts aus.

Es ist aber ebenfalls möglich, dass auch ein gewindefreier Abschnitt des Schafts mit dem Beschichtungsmaterial gefüllten Nuten aufweist.

Bei dem Schraubengewinde der Spanplattenschraube kann es sich um ein übliches Gewinde handeln, bei dem also die Gewindekante in einer Zylindermantelfläche liegt, natürlich mit Ausnahme der Schraubenspitze.

Es ist aber ebenfalls möglich und wird von der Erfindung vorgeschlagen, dass es sich bei der Spanplattenschraube um eine Schraube mit einem so genannten Plastofast Gewinde handelt.

Ebenfalls möglich ist eine trilobulare Schraubenform.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: eine Seitenansicht einer von der Erfindung vorgeschlagenen Spanplattenschraube;
- Figur 2: einen vergrößerten Querschnitt durch den Gewindeabschnitt der Schraube der Figur 1;
- Figur 3: eine Seitenansicht eines Abschnitts des Gewindeschafts mit schräg verlaufenden Kanten;
- Figur 4: eine Seitenansicht einer von der Erfindung vorgeschlagenen Spanplattenschraube;
- Figur 5: einen vergrößerten Querschnitt durch den Gewindeabschnitt der Schraube der Figur 4, und
- Figur 6: die Seitenansicht eines Ausschnitts aus einem Schraubenschaft bei einer geänderten Ausführungsform.

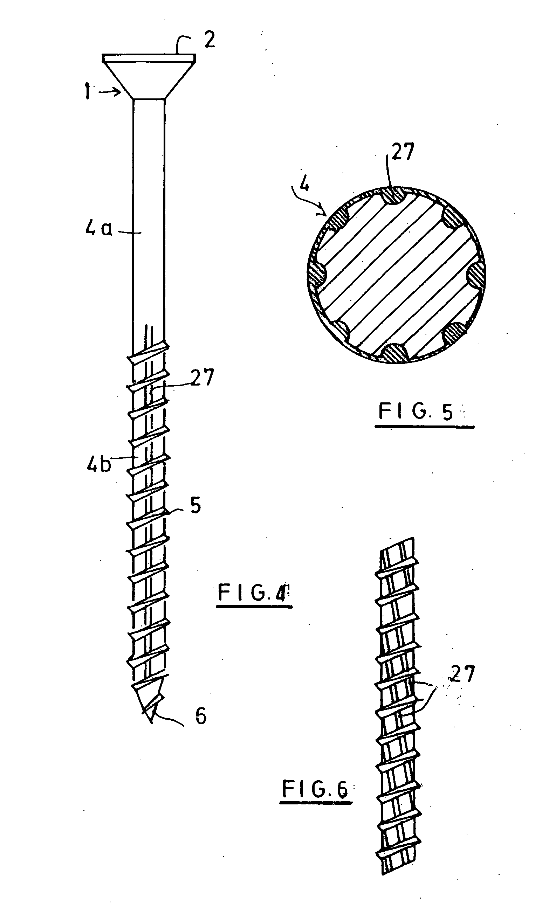

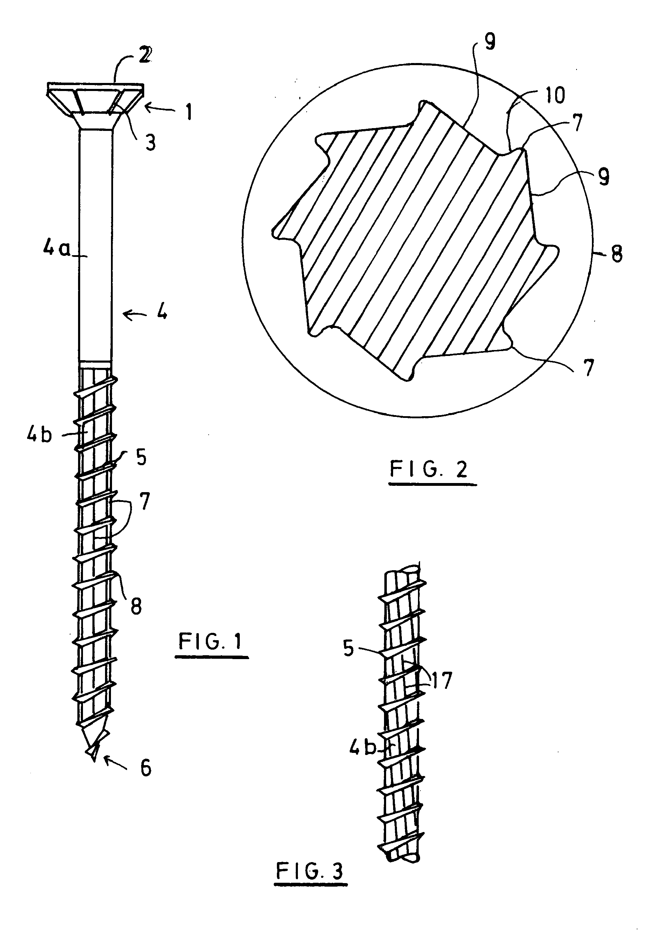

Die in Figur 1 dargestellte Schraube enthält einen Schraubenkopf 1, bei dem es sich um einen Senkkopf handelt. Unterhalb der flachen Stirnseite 2 ist der Schraubenkopf 1 kegelstumpfförmig ausgebildet und weist dort mehrere gleichmäßig über den Umfang verteilte Fräsrippen 3 auf, die beim Einschrauben eine Ansenkung für den Schraubenkopf 1 in der Holzoberfläche bilden.

An den Schraubenkopf 1 schließt sich dann der Schraubenschaft 4 an, der zunächst einen unmittelbar am Schraubenkopf 1 beginnenden gewindefreien Abschnitt 4 a aufweist. Dieser gewindefreie Abschnitt 4 a erstreckt sich über etwas weniger als die halbe Länge des gesamten Schraubenschafts 4. An den gewindefreien Abschnitt 4 an schließt sich ein mit einem Gewinde versehener Abschnitt 4 b an. Bei dem Gewinde 5 handelt es sich um ein übliches Spanplattengewinde, also ein Gewinde mit einer unsymmetrischen Flankenform, bei dem die zum Schraubenkopf 1 gewandte Flanke näher an einer Ebene senkrecht zur Schraubenlängsachse liegt als die der Schraubenspitze 6 zugewandte Gewindeflanke.

Zwischen den Windungen des Gewindes 5 sind mehrere in Längsrichtung verlaufende Kanten 7 ausgebildet, die gegenüber dem Gewindeschaft etwas vorspringen, aber nicht bis zu der gedachten Zylindermantelfläche reichen, in der die Gewindekante 8 liegt.

Einzelheiten dieser Kantenform gehen aus der Figur 2 hervor, die einen Querschnitt durch den Gewindeabschnitt 4 b des Schraubenschafts 4 zeigt. Die Kanten 7 verlaufen abgerundet. Sie werden auf der einen Seite von einer ebenen Fläche 9 begrenzt, die im Querschnitt geradlinig bis zu der Kante 7 verläuft. Auf der anderen Seite werden die Kanten 7 ebenfalls von einer schmalen ebenen Fläche 10 begrenzt, die im Querschnitt ungefähr auf einer Durchmesserlinie liegt. Der Winkel zwischen einer breiten Begrenzungsfläche 10 einer Kante 7 und der schmalen Begrenzungsfläche 9 der nächsten Kante 7 beträgt ungefähr 90°. Es sind bei der dargestellten Ausführungsform acht derartige identisch ausgebildete Kanten 7 vorhanden. Der Querschnitt ist also punktsymmetrisch bezüglich eines Winkels von 45 Grad. Beim Einschrauben wird der in Figur 2 zu sehende Querschnitt im Uhrzeigersinn verdreht, so dass die Kanten 7 also im Gegenuhrzeigersinn, das heißt in Ausdrehrichtung zeigen.

Während bei der Ausführungsform nach Figur 1 die Kanten 7, siehe auch Figur 2, parallel zur Längsachse verlaufen, zeigt Figur 3 die Seitenansicht eines Schaftabschnitts einer Schraube, bei der innerhalb des das Gewinde 5 aufweisenden Abschnitts die Längskanten 17 schräg zur Längsachse verlaufen, also gewendelt sind. Im dargestellten Beispiel verläuft die Wendelung entgegengesetzt zur Richtung des Gewindes 5. Die umgekehrte Anordnung ist aber ebenfalls möglich und liegt im Rahmen der Erfindung.

Die in Figur 4 dargestellte Schraube enthält einen Schraubenkopf 1, bei dem es sich um einen Senkkopf handelt. Unterhalb der flachen Stirnseite 2 ist der Schraubenkopf 1 kegelstumpfförmig ausgebildet. Diese Unterseite kann entweder, wie es dargestellt ist, glatt ausgebildet sein oder auch mehrere gleichmäßig über den Umfang verteilte Fräsrippen aufweisen, die beim Einschrauben eine Ansenkung für den Schraubenkopf 1 in der Holzoberfläche bilden.

An den Schraubenkopf 1 schließt sich dann der Schraubenschaft 4 an, der zunächst einen unmittelbar am Schraubenkopf 1 beginnenden gewindefreien Abschnitt 4 a aufweist. Dieser gewindefreie Abschnitt 4 a erstreckt sich über etwas weniger als die halbe Länge des gesamten Schraubenschafts 4. An den gewindefreien Abschnitt 4 a schließt sich ein mit einem Gewinde versehener Abschnitt 4 b an. Bei dem Gewinde 5 handelt es sich um ein übliches Spanplattengewinde, also ein Gewinde mit einer unsymmetrischen Flankenform, bei dem die zum Schraubenkopf 1 gewandte Flanke näher an einer Ebene senkrecht zur Schraubenlängsachse liegt als die der Schraubenspitze 6 zugewandte Gewindeflanke.

Zwischen den Windungen des Gewindes 5 sind mehrere in Längsrichtung verlaufende Nuten 27 ausgebildet, die Vertiefungen in dem Gewindeschaft bilden. Einzelheiten dieser Nutenform gehen aus der Figur 4 hervor, die einen Querschnitt durch den Gewindeabschnitt 4 b des Schraubenschafts 4 zeigt. Die Nuten 27 verlaufen in Längsrichtung des Schraubenschafts und weisen einen halbkreisförmigen Querschnitt auf. Es sind im dargestellten Beispiel acht gleichmäßig über den Umfang verteilte Nuten 27 vorhanden. Wie man der Figur vier entnehmen kann, reichen die Nuten 27 von dem Übergang zwischen der Spitze der Schraube und dem Gewinde bis zu dem gewindefreien Abschnitts des Schafts. Erfindungsgemäß ist nun der mit dem Gewinde versehene Teil des Schafts mit einer Beschichtung aus einem Material versehen, das bei Erwärmung Klebereigenschaften entwickelt. Die Beschichtung kann über die zylindrische Oberfläche des Schraubenschafts reichen, sie füllt aber die Nuten 27 im wesentlichen vollständig aus. Beim Einschrauben der Schraube tritt eine beachtliche Erwärmung auf, die dazu ausgenutzt werden kann, den Klebstoff in seinen klebenden Zustand zu versetzen. Dabei kann auch eine gewisse Ausdehnung des Klebstoffs auftreten, so dass der in den Nuten 27 vorhandene Teil sich nach außen drückt.

Im dargestellten Beispiel reichen die Nuten nur über den Gewindeabschnitt des Schafts. Es ist aber auch möglich, dass der gewindefreie Abschnitt des Schafts mit einer Beschichtung versehen ist, die dann nur auf der Oberfläche aufgebracht ist. Auch die Unterseite des Schraubenkopfs kann mit der Beschichtung versehen sein.

Es ist ebenfalls möglich, dass die Nuten 27 oder einige der Nuten sich auch über den gewindefreien Abschnitts des Schraubenschafts erstrecken.

Während bei der in Figur 4 in Seitenansicht dargestellten Ausführungsform die Nuten 27 parallel zur Längsachse der Schraube verlaufen, zeigt Figur 6 die Seitenansicht eines Ausschnitts aus einem Schraubenschaft, bei dem innerhalb des das Gewinde 5 aufweisenden Teils die Nuten 27 schräg zur Längsachse verlaufen, also gewendelt. Die Wendelung erfolgt dabei in umgekehrtem Drehsinn zu der Wendelung der Gewindegänge des Gewindes 5. Dies ist nicht erforderlich, sondern könnte auch in umgekehrter Richtung erfolgen. Außerdem ist es natürlich denkbar, dass zwischen den Gewindegängen des Gewindes 5 nur einzelne Vertiefungen sind, die nicht hintereinander angeordnet sind.

## Patentansprüche

1. Spanplattenschraube, mit
1.1 einem Schraubenkopf (1),
1.2 einem Schraubenschaft (4),
1.3 einer Schraubenspitze (6) und
1.4 einem sich über mindestens einen Teil (4b) des Schafts (4) erstreckenden Gewinde (5), sowie mit
1.5 einer Rückdrehsicherung.

2. Spanplattenschraube nach Anspruch 1, bei der die Rückdrehsicherung am Schaft (4) der Schraube ausgebildet ist.

3. Spanplattenschraube nach Anspruch 1 oder 2, bei dem die Rückdrehsicherung eine Beschichtung aus einem Klebewirkung entwickelnden Material aufweist, die über mindestens einen Teil des Schraubenschafts (4) aufgebracht ist.

4. Spanplattenschraube nach Anspruch 3, bei der die Beschichtung sich über den das Schraubengewinde (5) aufweisenden Teil des Schafts (4) erstreckt.

5. Spanplattenschraube nach einem der vorhergehenden Ansprüche, bei der der Schaft (4) mindestens in einem Teil des Gewindeabschnitts (4b) zwischen den Windungen des Gewindes (5) einen von einer Kreisform abweichenden Querschnitt aufweist.

6. Spanplattenschraube nach Anspruch 5, bei der der Querschnitt abgerundete in Längsrichtung der Schraube verlaufende Kanten (7) aufweist.

7. Spanplattenschraube nach Anspruch 5 oder 6, bei der der Schraubenschaft (4) mindestens in einem Teil des Gewindeabschnitts (4 b) zwischen den Windungen des Gewindes (5) Nuten (27) aufweist.

8. Spanplattenschraube nach Anspruch 7, bei der die Beschichtung die Nuten (27) ausfüllt.

9. Spanplattenschraube nach einem der Ansprüche 5 bis 8, bei der der Querschnitt in Rückdrehrichtung zeigende abgerundete Kanten (7) aufweist.

10. Spanplattenschraube nach einem der Ansprüche 5 bis 9, bei der der von der Kreisform abweichende Querschnitt über die gesamte Länge des Gewindeabschnitts (4b) ausgebildet ist und insbesondere die Kanten (7) über die gesamte Länge des Gewindeabschnitts (4b) reichen.

11. Spanplattenschraube nach einem der Ansprüche 7 bis 10, bei der die Nuten (27) über die gesamte Länge des Gewindeabschnitts (4 b) ausgebildet sind und insbesondere die Kanten der Nuten (27) über die gesamte Länge des Gewindeabschnitts (4 b) reichen.

12. Spanplattenschraube nach einem der vorhergehenden Ansprüche, bei der ein gewindefreier Abschnitt (4 a) des Schraubenschafts (4) einen kreisrunden Querschnitt aufweist.

13. Spanplattenschraube nach einem der vorhergehenden Ansprüche, bei der ein gewindefreier Abschnitt (4 a) des Schraubenschafts ebenfalls einen von einer Kreisform abweichenden Querschnitt aufweist, insbesondere mit in Längsrichtung der Schraube verlaufende Kanten (7) versehen ist.

14. Spanplattenschraube nach einem der Ansprüche 5 bis 13, bei der ein gewindefreier Abschnitt (4a) des Schraubenschafts ebenfalls Nuten (27) aufweist.

15. Spanplattenschraube nach einem der vorhergehenden Ansprüche, bei der die Gewindekante (8) des Gewindes in einer Zylindermantelfläche liegt.

16. Spanplattenschraube nach einem der vorhergehenden Ansprüche, bei der das Gewinde ein Plastofast- Gewinde ist.

17. Spanplattenschraube nach einem der vorhergehenden Ansprüche, als trilobulare Schraube ausgebildet.
